# EUROPÄISCHE PATENTSCHRIFT

(11) **EP 3 892 483 B1**
(45) Veröffentlichungstag und Bekanntmachung des Hinweises auf die Patenterteilung: **24.08.2022**
(21) Anmeldenummer: 20168774.6
(22) Anmeldetag: 08.04.2020
(51) Int. Cl.: B60J 7/08, B65H 18/10, B60J 7/10

(54) **LADEGUTBEHÄLTER UND FAHRZEUG**
STORAGE GOOD CONTAINER AND VEHICLE
RÉCIPIENT POUR CHARGES ET VÉHICULE

(43) Veröffentlichungstag der Anmeldung: 13.10.2021
(73) Patentinhaber: Schmitz Cargobull AG, 48341 Altenberge (DE)
(72) Erfinder: Reinhardt, Frank, 99947 Bad Langensalza (DE)
(74) Vertreter: Liedtke & Partner Patentanwälte

(56) Entgegenhaltungen:
- EP-A2- 3 012 138
- CA-A1- 2 428 891
- US-B1- 6 641 199

## Beschreibung

Die Erfindung betrifft einen Ladegutbehälter für ein Fahrzeug gemäß dem Oberbegriff des Anspruchs 1.

Die Erfindung betrifft weiterhin ein Fahrzeug, umfassend einen solchen Ladegutbehälter.

Bei auf Fahrzeugen angeordneten Behältern ist es erforderlich, dass in dem Behälter befindliches Ladegut nicht aus diesem entweicht, beispielsweise durch ein Herausschleudern bei Erschütterungen oder aufgrund von Fahrtwind. Hierzu sind derartige Behälter mit einer Plane abgedeckt.

Aus der EP 3 012 138 A2 ist ein Behälter mit einer oberen Beladeöffnung und einer Planenabdeckvorrichtung bekannt, die eine Plane, einen länglichen Wickelkern und eine Planenspannvorrichtung aufweist. Der Wickelkern ist eine sich entlang einer ersten Behälterseite und einer der ersten Behälterseite gegenüberliegenden zweiten Behälterseite erstreckende längliche Stange in Rohrform. Die Plane ist einerseits an der ersten Behälterseite und andererseits an dem Wickelkern fixiert. In einer die Beladeöffnung freigebenden Öffnungsstellung ist die Plane als Wickel auf dem Wickelkern aufgewickelt an der ersten Seite des Behälters gelagert. Durch Rollen des Wickelkerns ist die Plane von der ersten Behälterseite zu der zweiten Behälterseite von dem Wickelkern abwickelbar und dabei über die Beladeöffnung ausbreitbar. Weiterhin ist die Plane mittels der Planenspannvorrichtung in einer die Beladeöffnung abdeckenden Schließstellung spannbar. Dabei weist die Planenspannvorrichtung an der zweiten Behälterseite einen nach außen abstehenden Spannhakenabschnitt auf, über den hinweg der Wickelkern beim Ausbreiten der Plane bewegbar ist und in den der Wickelkern zum Spannen der Plane nach deren Ausbreiten einhakbar ist. Der Wickelkern ist in seinem im Spannhakenabschnitt eingehakten Zustand drehbar, um die Plane ein Stück weit wieder aufzuwickeln und dabei in der Schließstellung zu spannen. Die Planenspannvorrichtung weist eine an einem ersten Längsende des Wickelkerns angeordnete Arretierungsvorrichtung zum Arretieren des Wickelkerns in einer die Plane in der Schließstellung spannenden Wickelkerndrehstellung auf, wobei die Arretierungsvorrichtung zwei zum Arretieren des Wickelkerns miteinander verriegelnd in Eingriff bringbare Eingriffsmittel aufweist. Von den Eingriffsmitteln ist eines am Wickelkern oder an einem mit dem Wickelkern zur gemeinsamen Drehung verbundenen Element und das andere am Behälter befestigt. Die Planenspannvorrichtung weist weiterhin einen die Eingriffsmittel umfassenden Ratschenmechanismus auf. Der Ratschenmechanismus weist einen Zahnkranzabschnitt als wickelkernseitiges Eingriffsmittel der Arretierungsvorrichtung auf. Das behälterseitige Eingriffsmittel ist zwischen einer Wickelkern-Arretierstellung und einer Wickelkern-Freigabestellung bewegbar an dem Behälter befestigt und mittels Federkraft einer Feder zu der Wickelkern-Arretierstellung vorgespannt. Die Planenspannvorrichtung weist eine mit dem Wickelkern verbundene oder zur gemeinsamen Drehung damit lösbar verbindbare Kurbeleinrichtung auf, wobei das wickelkernseitige Eingriffsmittel der Arretierungsvorrichtung an der Kurbeleinrichtung vorgesehen ist.

Weitere Ladegutbehälter mit einer aufrollbaren Planenabdeckung sind in der US 6 641 199 B1 und der CA 2 428 891 A1 beschrieben.

Der Erfindung liegt die Aufgabe zu Grunde, einen gegenüber dem Stand der Technik verbesserten Ladegutbehälter für ein Fahrzeug und ein verbessertes Fahrzeug anzugeben.

Die Aufgabe wird erfindungsgemäß gelöst durch einen Ladegutbehälter, welcher die im Anspruch 1 angegebenen Merkmale aufweist, und durch ein Fahrzeug, welches die im Anspruch 14 angegebenen Merkmale aufweist.

Vorteilhafte Ausgestaltungen der Erfindung sind Gegenstand der abhängigen Ansprüche.

Ein Ladegutbehälter für ein Fahrzeug, beispielsweise eine Kippmulde für ein Fahrzeug, umfasst einen Behälterkörper, umfassend eine obere Behälteröffnung, beispielsweise eine Beladeöffnung. Weiterhin umfasst der Behälterkörper eine Abdeckvorrichtung für die Behälteröffnung mit einer Plane, einem länglichen Wickelkern und einer Planenspannvorrichtung. Der Wickelkern erstreckt sich mit seiner Längsachse in einer ersten Position entlang einer ersten Behälterseite und in einer zweiten Position entlang einer der ersten Behälterseite gegenüberliegenden zweiten Behälterseite. Die Plane ist einseitig an der ersten Behälterseite und mit einer gegenüberliegenden Planenseite an dem Wickelkern befestigt. Weiterhin ist die Plane in einer die Behälteröffnung verschließenden Verschlussstellung zumindest teilweise von dem Wickelkern abgewickelt, über die Behälteröffnung geführt und an der zweiten Behälterseite und über den Wickelkern an dem Behälterkörper arretiert und gespannt. Die Planenspannvorrichtung umfasst zumindest eine an einer Längsseite an dem Wickelkern angeordnete Handkurbel zur Erzeugung einer Drehung des Wickelkerns um seine Längsachse, wobei die Handkurbel in einem Betriebszustand mit dem Wickelkern in mechanischem Eingriff steht und in einem von dem Betriebszustand abweichenden Freilaufzustand der mechanische Eingriff gelöst ist. Weiterhin umfasst die Planenspannvorrichtung zumindest zwei in Längsausdehnung der zweiten Behälterseite an dieser voneinander beabstandet angeordnete Aufnahmehaken, in welche der Wickelkern an verschiedenen Längspositionen einhakbar und bei Ausführung einer Drehung desselben in Aufwickelrichtung der Plane die Plane spannbar ist.

Erfindungsgemäß umfasst die Planenspannvorrichtung zumindest eine Konsole, welche an einem der Handkurbel im gespannten Zustand der Plane zugewandten Ende der zweiten Behälterseite befestigt ist. Dabei umfasst die Konsole eine obere Auflagefläche für eine Auflage des mit der Handkurbel versehenen Endes des Wickelkerns und ist derart höhenpositioniert an der zweiten Behälterseite befestigt, dass der Wickelkern im gespannten Zustand der Plane geklemmt auf der oberen Auflagefläche aufliegt. Hierbei bewirkt eine Auslenkung des mit der Handkurbel versehenen Endes des Wickelkerns die Klemmung.

Mittels der Klemmung des Wickelkerns, welcher beispielsweise stangenförmig, zum Beispiel rohrförmig, ausgebildet ist, kann eine ausreichende Fixierung desselben realisiert werden, so dass die Plane zumindest während eines Stillstands des Fahrzeugs sicher in ihrer gespannten Position gehalten ist. Somit ist es möglich, den Wickelkern im gespannten Zustand der Plane, beispielsweise indirekt über die Handkurbel, zu arretieren, ohne dass sich der gespannte Zustand der Plane in diesem Zeitraum löst. Dies kann aufgrund des einfachen Aufbaus gegenüber dem aus dem Stand der Technik bekannten Ratschenmechanismus zur Verspannung und Arretierung der Plane mit besonders geringem Material- und Kostenaufwand realisiert werden. Weiterhin zeichnet sich die Konsole neben ihrem einfachen Aufbau gegenüber dem Ratschenmechanismus durch ein signifikant verringertes Gewicht aus und eine Bedienersicherheit ist erhöht, da eine Gefahr von Quetschungen einer Hand oder eines Fingers eines Nutzers gegenüber dem Ratschenmechanismus verringert ist. Weiterhin ist aufgrund des einfachen Aufbaus auch ein Wartungsaufwand signifikant verringert oder entfällt vollständig.

Die Auslenkung des Wickelkerns wird beispielsweise dadurch erreicht, dass eine Oberkante der oberen Auflagefläche der Konsole höher angeordnet ist als eine Unterkante des Wickelkerns, wenn dieser bei freiem Ende, an welchem die Kurbel angeordnet ist, im gespannten Zustand der Plane an den Aufnahmehaken verspannt ist. Dabei entspricht dieser Höhenunterschied der späteren Auslenkung des Wickelkerns, wenn dieser mit seinem Ende auf der oberen Auflagefläche der Konsole aufliegt. Die Auslenkung erfolgt dabei insbesondere durch eine durch die Verspannung erzeugte elastische Verformung, insbesondere Biegung, des Wickelkerns.

In einer möglichen Ausgestaltung des Ladegutbehälters umfasst die Konsole eine Arretierstruktur zur Arretierung der Handkurbel in ihrem Betriebszustand im gespannten Zustand der Plane. Mittels dieser Arretierung der Handkurbel in ihrem Betriebszustand, in welchem diese mit dem Wickelkern in mechanischem Eingriff steht, kann somit auch eine besonders stabile Arretierung des Wickelkerns realisiert werden, welche diesen und die Spannung der Plane insbesondere auch während des Fahrbetriebs des Fahrzeugs sicher hält.

In einer weiteren möglichen Ausgestaltung des Ladegutbehälters umfasst die Arretierstruktur zumindest eine Sperre zur Sperrung einer Bewegung der Handkurbel aus ihrem Betriebszustand in den Freilaufzustand. Somit ist eine Bewegung der Handkurbel in den Freilaufzustand gesperrt und ein Lösen des mechanischen Eingriffs zwischen Handkurbel und Wickelkern sicher vermieden.

In einer weiteren möglichen Ausgestaltung des Ladegutbehälters ist die Sperre derart ausgerichtet, dass ein Hebelarm der Handkurbel im arretierten Zustand zumindest im Wesentlichen in Richtung einer Hochachse des Behälterkörpers verläuft. Somit kann ein Herausragen der Handkurbel über eine seitliche Begrenzung des Ladegutbehälters vermieden werden, so dass zulässige Breitenmaße des den Ladegutbehälter umfassenden Fahrzeugs sicher eingehalten werden können. Weiterhin können so während eines Fahrbetriebs des Fahrzeugs Kollisionen der Handkurbel mit seitlich neben dem Ladegutbehälter befindlichen Objekten, Personen oder Tieren wirkungsvoll vermieden werden.

In einer weiteren möglichen Ausgestaltung des Ladegutbehälters umfasst die Sperre ein Rastelement zur Verrastung der Handkurbel. Dies ermöglicht eine einfache Anordnung der Handkurbel in oder an der Sperre bei gleichzeitig besonders sicherem Halt der Handkurbel in ihrer gesperrten Position. Auch kann bei einem Einrasten der Handkurbel in dem Rastelement in einfacher Weise eine haptische und/oder akustische Rückmeldung bei Erreichen einer in der Sperre gesicherten Position der Handkurbel an einen Nutzer gegeben werden.

In einer weiteren möglichen Ausgestaltung des Ladegutbehälters umfasst die Arretierstruktur zumindest eine Drehsperre zur Sperrung einer Bewegung der Handkurbel und einer damit verbundenen Drehung des Wickelkerns entgegen der Aufwickelrichtung der Plane. Somit sind eine Bewegung der Handkurbel entgegen der Aufwickelrichtung der Plane und eine damit verbundene Drehbewegung des Wickelkerns gesperrt, so dass ein Lösen des gespannten Zustands der Plane sicher vermieden wird.

In einer weiteren möglichen Ausgestaltung des Ladegutbehälters ist die Drehsperre derart ausgerichtet, dass ein Hebelarm der Handkurbel im arretierten Zustand zumindest im Wesentlichen in Richtung einer Hochachse des Behälterkörpers verläuft. Somit kann ein Herausragen der Handkurbel über eine seitliche Begrenzung des Ladegutbehälters vermieden werden, so dass zulässige Breitenmaße des den Ladegutbehälter umfassenden Fahrzeugs sicher eingehalten werden können. Weiterhin können so während eines Fahrbetriebs des Fahrzeugs Kollisionen der Handkurbel mit seitlich neben dem Ladegutbehälter befindlichen Objekten, Personen oder Tieren wirkungsvoll vermieden werden.

In einer weiteren möglichen Ausgestaltung des Ladegutbehälters umfasst die Drehsperre ein Rastelement zur Verrastung der Handkurbel. Dies ermöglicht eine einfache Anordnung der Handkurbel in oder an der Drehsperre bei gleichzeitig besonders sicherem Halt der Handkurbel in ihrer gesperrten Position. Auch kann bei einem Einrasten der Handkurbel in dem Rastelement in einfacher Weise eine haptische und/oder akustische Rückmeldung bei Erreichen einer in der Drehsperre gesicherten Position der Handkurbel an einen Nutzer gegeben werden.

In einer weiteren möglichen Ausgestaltung des Ladegutbehälters sind die Sperre und die Drehsperre als gemeinsames Element ausgebildet. Somit sind ein Aufbau und eine Bedienung der Arretierstruktur weiter vereinfacht und ein Gewicht derselben ist minimiert.

In einer weiteren möglichen Ausgestaltung des Ladegutbehälters beträgt die Auslenkung des Wickelkerns 10 mm bis 20 mm. Eine solche Auslenkung führt zu einer sicheren Klemmung des Wickelkerns bei gleichzeitig besonders geringer mechanischer Beanspruchung des Wickelkerns. Auch ist bei einer derartigen Auslenkung eine Anordnung des Wickelkerns auf der oberen Auflagefläche der Konsole einfach und mit geringem Kraftaufwand für einen Nutzer ausführbar.

In einer weiteren möglichen Ausgestaltung des Ladegutbehälters ist die Auslenkung des Wickelkerns zumindest im Wesentlichen in Richtung einer Hochachse des Behälterkörpers ausgebildet. Hierdurch wird eine besonders sichere Klemmung des Wickelkerns an der oberen Auflagefläche der Konsole bei gleichzeitig sicherem Halt des Wickelkerns an den Aufnahmehaken erreicht.

In einer weiteren möglichen Ausgestaltung des Ladegutbehälters ist der Wickelkern zumindest im Bereich seines mit der Handkurbel versehenen Endes als Hohlkörper ausgebildet. Innerhalb des Hohlkörpers ist ein Eingriffselement angeordnet oder ausgebildet und die Handkurbel umfasst ein mit dem Eingriffselement korrelierendes zweites Eingriffselement, wobei ein das zweite Eingriffselement umfassender Abschnitt der Handkurbel konzentrisch innerhalb des Hohlkörpers anordbar ist. Die beiden Eingriffselemente stehen im Betriebszustand der Handkurbel in mechanischem Eingriff und der Abschnitt der Handkurbel ist im Freilaufzustand der Handkurbel in Längsrichtung des Wickelkerns zum mit der Handkurbel versehenen Ende des Wickelkerns verschoben. Eine solche Anordnung und Ausbildung von Wickelkern und Handkurbel ist einerseits besonders einfach und mit geringem Material und Kostenaufwand realisierbar und zeichnet sich andererseits durch eine einfache und sichere Bedienbarkeit aus. Weiterhin ist eine solche Anordnung sehr platzsparend, sicher, wartungsarm, stabil und zuverlässig.

In einer weiteren möglichen Ausgestaltung des Ladegutbehälters ist die Plane in einer die Behälteröffnung freigebenden Öffnungsstellung auf dem Wickelkern aufgewickelt im Bereich der ersten Behälterseite angeordnet. Dies ermöglicht eine einfache und sichere Beladung des Ladegutbehälters, beispielsweise mit einem Schüttgut.

Das erfindungsgemäße Fahrzeug umfasst zumindest einen zuvor beschriebenen Ladegutbehälter, welcher sich durch eine einfach realisierbare Abdeckung der Behälteröffnung und durch eine mit besonders geringem Material- und Kostenaufwand realisierbare und dabei besonders sichere Arretierung der Plane im gespannten und geschlossenen Zustand auszeichnet.

In einer möglichen Ausgestaltung des Fahrzeugs ist der Ladegutbehälter eine Kippmulde. Die Kippmulde ist aufgrund der Ausbildung der Abdeckvorrichtung, des Wickelkerns, der Planenspannvorrichtung und der Arretierstruktur besonders einfach beladbar sowie einfach und sicher mit der Plane verschließbar.

Ausführungsbeispiele der Erfindung werden im Folgenden anhand von Zeichnungen näher erläutert.

Darin zeigen:
- Figur 1: schematisch eine Schnittdarstellung eines Ladegutbehälters für ein Fahrzeug,
- Figur 2: schematisch eine Seitenansicht des Ladegutbehälters gemäß Figur 1,
- Figur 3: schematisch eine erste perspektivische Ansicht eines Ausschnitts eines ersten Ausführungsbeispiels eines Ladegutbehälters für ein Fahrzeug mit einer arretierten Handkurbel,
- Figur 4: schematisch eine zweite perspektivische Ansicht eines Ausschnitts des Ladegutbehälters gemäß Figur 3 mit arretierter Handkurbel,
- Figur 5: schematisch eine dritte perspektivische Ansicht eines Ausschnitts des Ladegutbehälters gemäß Figur 3 mit arretierter Handkurbel,
- Figur 6: schematisch eine vierte perspektivische Ansicht eines Ausschnitts des Ladegutbehälters gemäß Figur 3 mit nicht arretierter Handkurbel,
- Figur 7: schematisch eine erste perspektivische Ansicht eines Ausschnitts eines zweiten Ausführungsbeispiels eines Ladegutbehälters für ein Fahrzeug mit einer arretierten Handkurbel,
- Figur 8: schematisch eine zweite perspektivische Ansicht eines Ausschnitts des Ladegutbehälters gemäß Figur 7 mit nicht arretierter Handkurbel,
- Figur 9: schematisch eine erste perspektivische Ansicht eines Ausschnitts eines dritten Ausführungsbeispiels eines Ladegutbehälters für ein Fahrzeug mit einer arretierten Handkurbel und
- Figur 10: schematisch eine zweite perspektivische Ansicht eines Ausschnitts des Ladegutbehälters gemäß Figur 9.

Einander entsprechende Teile sind in allen Figuren mit den gleichen Bezugszeichen versehen.

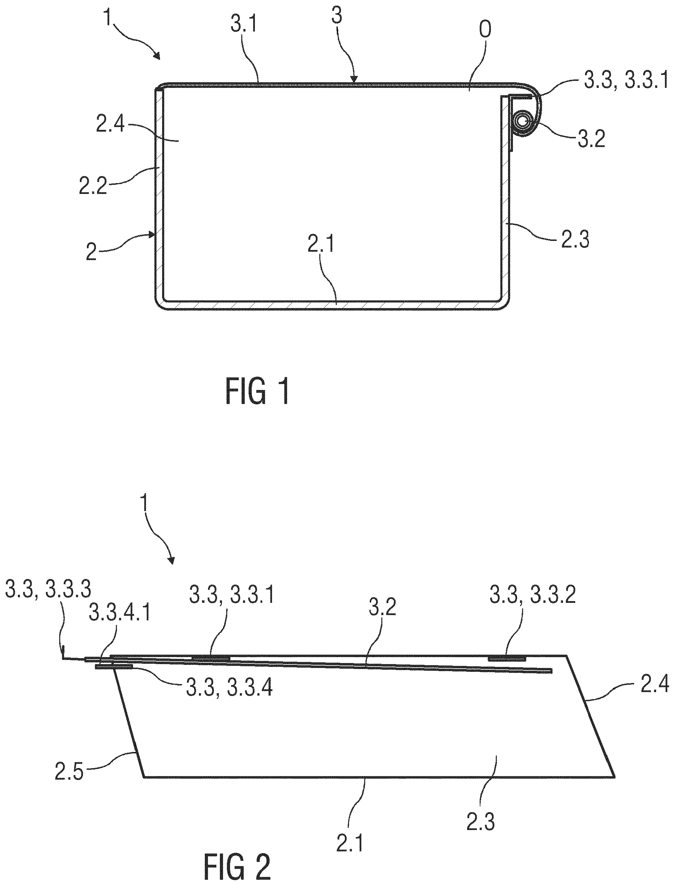

In **Figur 1** ist eine Schnittdarstellung eines möglichen Ausführungsbeispiels eines Ladegutbehälters 1 für ein Fahrzeug dargestellt. **Figur 2** zeigt eine Seitenansicht des Ladegutbehälters 1 gemäß Figur 1.

Der Ladegutbehälter 1 ist insbesondere als so genannte Kippmulde ausgebildet und umfasst einen Behälterkörper 2 mit einem Behälterboden 2.1 und zwei gegenüberliegende Behälterseitenwände, im Folgenden als Behälterseiten 2.2, 2.3 bezeichnet, welche vom Behälterboden 2.1 nach oben abragen. Weiterhin umfasst der Ladegutbehälter 1 eine Behälterklappe 2.4 und eine dieser gegenüberliegende, die beiden Behälterseiten 2.2, 2.3 verbindende Stirnwand 2.5. An einer Oberseite des Behälterkörpers 2 ist eine obere Behälteröffnung O zur Beladung desselben mit einem Gut, beispielsweise einem Schüttgut, ausgebildet.

Weiterhin umfasst der Ladegutbehälter 1 eine Abdeckvorrichtung 3 für die Behälteröffnung O, wobei die Abdeckvorrichtung 3 eine Plane 3.1, einen länglichen Wickelkern 3.2, welcher beispielsweise stangenförmig, zum Beispiel rohrförmig, ausgebildet ist, und eine Planenspannvorrichtung 3.3 umfasst. Die Plane 3.1 ist zur Erhaltung einer Übersichtlichkeit der Darstellung in Figur 2 nicht gezeigt.

Der Wickelkern 3.2 erstreckt sich mit seiner Längsachse in einer ersten Position entlang der ersten Behälterseite 2.2 und in einer zweiten Position entlang der der ersten Behälterseite 2.2 gegenüberliegenden zweiten Behälterseite 2.3.

Die Plane 3.1 ist einseitig an der ersten Behälterseite 2.2 und mit einer gegenüberliegenden Planenseite an dem Wickelkern 3.2 befestigt, wobei die Plane in einer dargestellten, die Behälteröffnung O verschließenden Verschlussstellung zumindest teilweise von dem Wickelkern 3.2 abgewickelt, über die Behälteröffnung O geführt und an der zweiten Behälterseite 2.3 und über den Wickelkern 3.2 an dem Behälterkörper 2 arretiert und gespannt ist. In dieser Verschlussstellung verhindert die Plane 3.1 somit ein Entweichen eines in dem Ladegutbehälter 1 befindlichen Ladeguts.

In einer nicht näher dargestellten Öffnungsstellung der Plane 3.1 gibt diese die Behälteröffnung O frei und ist auf dem Wickelkern 3.2 aufgewickelt im Bereich der ersten Behälterseite 2.2 angeordnet.

Die Planenspannvorrichtung 3.3 umfasst zumindest zwei in Längsausdehnung der zweiten Behälterseite 2.3 an dieser voneinander beabstandet angeordnete Aufnahmehaken 3.3.1, 3.3.2, in welche der Wickelkern 3.2 von unten an verschiedenen Längspositionen einhakbar und bei Ausführung einer Drehung desselben in Aufwickelrichtung der Plane 3.1 die Plane 3.1 spannbar ist.

Weiterhin umfasst die Planenspannvorrichtung 3.3 zumindest eine an einer Längsseite an dem Wickelkern 3.2 angeordnete Handkurbel 3.3.3 zur Erzeugung einer Drehung des Wickelkerns 3.2 um seine Längsachse, wobei die Handkurbel 3.3.3 in einem Betriebszustand mit dem Wickelkern 3.2 in mechanischem Eingriff steht und in einem von dem Betriebszustand abweichenden Freilaufzustand der mechanische Eingriff gelöst ist.

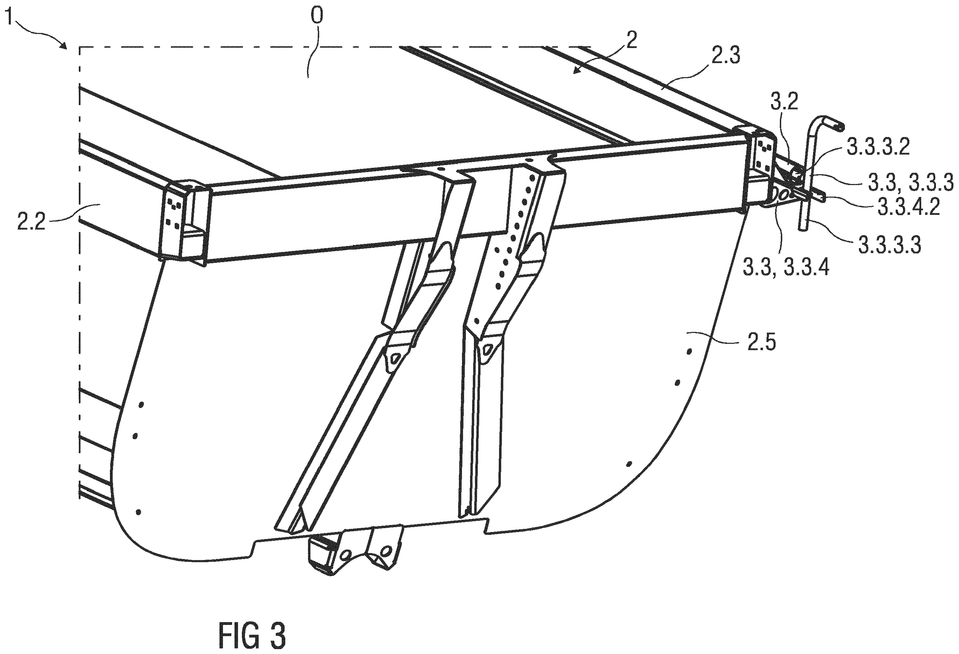

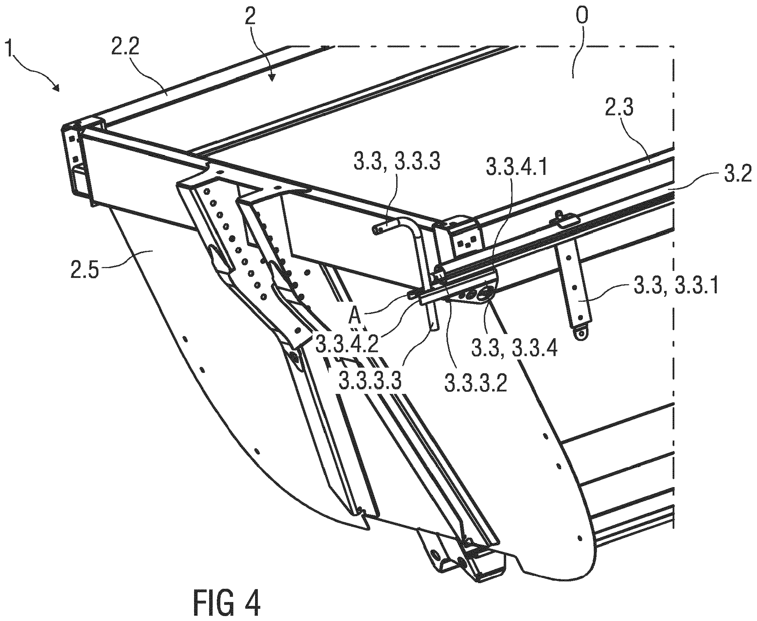

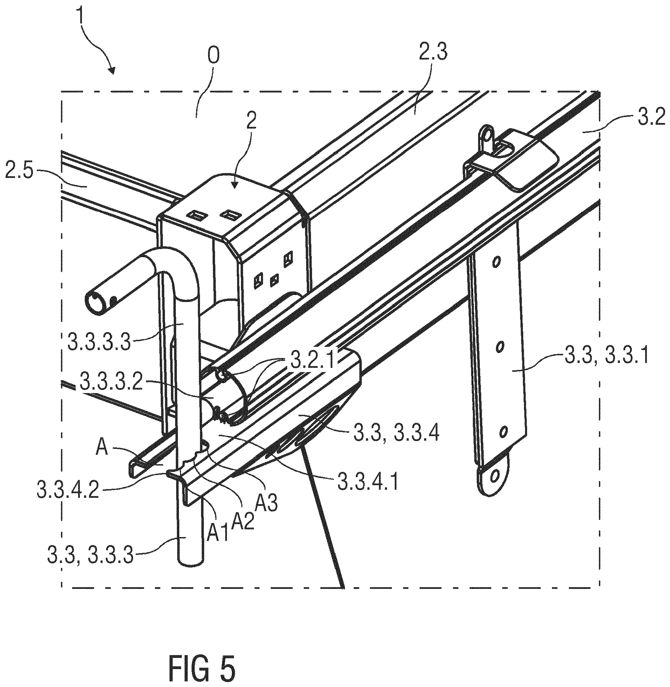

Hierzu ist, wie in den Figuren 3 bis 10 näher dargestellt, der Wickelkern 3.2 zumindest im Bereich seines mit der Handkurbel 3.3.3 versehenen Endes als Hohlkörper ausgebildet. Innerhalb des Hohlkörpers ist ein Eingriffselement 3.2.1 ausgebildet. Die Handkurbel 3.3.3 umfasst ein mit dem Eingriffselement 3.2.1 korrelierendes zweites Eingriffselement 3.3.3.1, wobei ein das zweite Eingriffselement 3.3.3.1 umfassender Abschnitt 3.3.3.2 der Handkurbel 3.3.3 konzentrisch innerhalb des Hohlkörpers angeordnet ist. Die beiden Eingriffselemente 3.2.1, 3.3.3.1 stehen dabei im Betriebszustand der Handkurbel 3.3.3 in mechanischem Eingriff. Der Abschnitt 3.3.3.2 der Handkurbel 3.3.3 ist zur Erzielung des Freilaufzustands in Längsrichtung des Wickelkerns 3.2 zum mit der Handkurbel 3.3.3 versehenen Ende des Wickelkerns 3.2 verschiebbar, beispielsweise aus diesem herausziehbar.

Um die Plane 3.1 in die Verschlussstellung zu überführen und zu spannen, wird die Plane 3.1 zunächst vollständig vom Wickelkern 3.2 abgewickelt und derart über die Behälteröffnung O geführt, dass der Wickelkern 3.2, gehalten durch die Plane 3.1, an der zweiten Behälterseite 2.3 frei herabhängt. Anschließend wird der Wickelkern 3.2 mittels der in ihrem Betriebszustand befindlichen Handkurbel 3.3.3 in eine Aufwickelrichtung gedreht und somit unter die Aufnahmehaken 3.3.1, 3.3.2 geführt. Dabei wird die Plane 3.1 gespannt.

Um ein Zurückdrehen des Wickelkerns 3.2 entgegen der Aufwickelrichtung zu verhindern, umfasst die Planenspannvorrichtung 3.3 weiterhin zumindest eine Konsole 3.3.4, welche an einem der Handkurbel 3.3.3 im gespannten Zustand der Plane 3.1 zugewandten Ende der zweiten Behälterseite 2.3 befestigt ist.

Dabei umfasst die Konsole 3.3.4 eine obere Auflagefläche 3.3.4.1 für eine Auflage des mit der Handkurbel 3.3.3 versehenen Endes des Wickelkerns 3.2. Ferner ist die Konsole 3.3.4 derart höhenpositioniert an der zweiten Behälterseite 2.3 befestigt, dass der Wickelkern 3.2 im gespannten Zustand der Plane 3.1 geklemmt auf der oberen Auflagefläche 3.3.4.1 aufliegt und eine dabei vorhandene Auslenkung des mit der Handkurbel 3.3.3 versehenen Endes des Wickelkerns 3.2 eine Klemmung desselben an der Konsole 3.3.4 bewirkt. Die Auslenkung des Wickelkerns 3.2 ist dabei zumindest im Wesentlichen in Richtung einer Hochachse des Behälterkörpers 2 ausgebildet und beträgt beispielsweise 10 mm bis 20 mm.

Das heißt, die Auslenkung des Wickelkerns 3.2 wird beispielsweise dadurch erreicht, dass eine Oberkante der oberen Auflagefläche 3.3.4.1 der Konsole 3.3.4 höher angeordnet ist als eine Unterkante des Wickelkerns 3.2, wenn dieser bei freiem Ende, an welchem die Kurbel 3.3.3 angeordnet ist, im gespannten Zustand der Plane 3.1 an den Aufnahmehaken 3.3.1, 3.3.2 verspannt ist. Dabei entspricht dieser Höhenunterschied der späteren Auslenkung des Wickelkerns 3.2, wenn dieser mit seinem Ende auf der oberen Auflagefläche 3.3.4.1 der Konsole 3.3.4 aufliegt.

Um auch bei großen Erschütterungen während eines Fahrbetriebs des Fahrzeugs eine Arretierung des Wickelkerns 3.2 und damit der Plane 3.1 im gespannten Zustand zu ermöglichen, umfasst die Konsole 3.3.4 weiterhin eine Arretierstruktur 3.3.4.2 zur Arretierung der Handkurbel 3.3.3 in ihrem Betriebszustand im gespannten Zustand der Plane 3.1. Verschiedene Ausführungsbeispiele der Konsole 3.3.4 mit verschiedenen Ausführungsbeispielen einer Arretierstruktur 3.3.4.2 sind in den Figuren 3 bis 10 dargestellt.

In den **Figuren 3 bis 5** sind verschiedene Ausschnitte eines ersten Ausführungsbeispiels eines Ladegutbehälters 1 für ein Fahrzeug mit einer arretierten Handkurbel 3.3.3 aus verschiedenen Perspektiven dargestellt. Die Plane 3.1 ist aus Gründen der Übersichtlichkeit nicht dargestellt.

Die Funktion des Ladegutbehälters 1 mit dem Behälterkörper 2 und der Abdeckvorrichtung 3 entspricht der beschriebenen Funktion des in den Figuren 1 und 2 dargestellten Ausführungsbeispiels des Ladegutbehälters 1.

Im dargestellten Ausführungsbeispiel umfasst die Konsole 3.3.4 eine Arretierstruktur 3.3.4.2, welche eine in die Auflagefläche 3.3.4.1 eingebrachte Aussparung A umfasst. Die Aussparung A ist in einer Richtung, welche vom Behälterkörper 2 in Längsrichtung des Wickelkerns 3.2 weggerichtet ist, geöffnet, so dass die Handkurbel 3.3.3 durch Bewegung in Längsrichtung des Wickelkerns 3.2 aus dem Betriebszustand in den Freilaufzustand bewegbar ist.

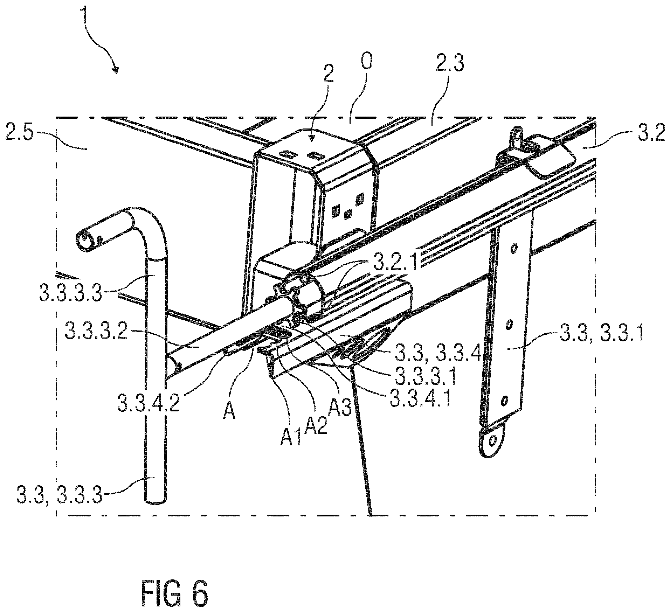

Um die Handkurbel 3.3.3 in der Arretierstruktur 3.3.4.2 anzuordnen und gegen eine Drehung zu sichern, wird diese nach Spannen der Plane 3.1 und Verklemmen des Wickelkerns 3.2 auf der Auflagefläche 3.3.4.1 der Konsole 3.3.4 soweit aus dem Wickelkern 3.2 herausgezogen, dass ein Hebelarm 3.3.3.3 derselben von der Konsole 3.3.4 beabstandet ist. Hierbei befindet sich die Handkurbel 3.3.3 in ihrem Freilaufzustand, welcher in Figur 6 näher dargestellt ist.

Anschließend kann die Handkurbel 3.3.3 in eine Position gedreht werden, in welcher der Hebelarm 3.3.3.3 zumindest im Wesentlichen in Richtung einer Hochachse des Behälterkörpers 2 verläuft.

Anschließend wird die Handkurbel 3.3.3 wieder in Richtung des Wickelkerns 3.2 und in die Aussparung A eingeführt. Somit ist diese und ist der Wickelkern 3.2 gegen eine Drehung gesichert. Dadurch bildet die Aussparung A eine Drehsperre.

Weiterhin umfasst die Aussparung A mit dem Hebelarm 3.3.3.3 korrelierende Sperrstrukturen A1 bis A3, welche die Handkurbel 3.3.3 bei Anlage des Hebelarms 3.3.3.3 in einer von diesen gehaltenen und durch eine gewollte Drehbewegung des Wickelkerns 3.2 und eines dadurch erzeugten Drucks gegen eine Bewegung der Handkurbel 3.3.3 aus ihrem Betriebszustand in den Freilaufzustand sichern. Somit bildet die Aussparung A gleichzeitig eine Sperre zur Sperrung einer Bewegung der Handkurbel 3.3.3 aus ihrem Betriebszustand in den Freilaufzustand. Das heißt, diese Sperre und die Drehsperre sind in Form der Aussparung A als gemeinsames Element ausgebildet.

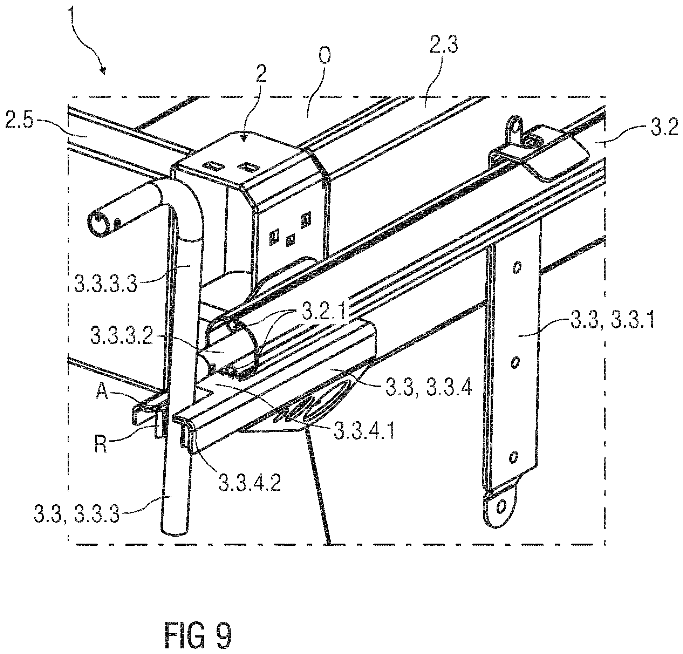

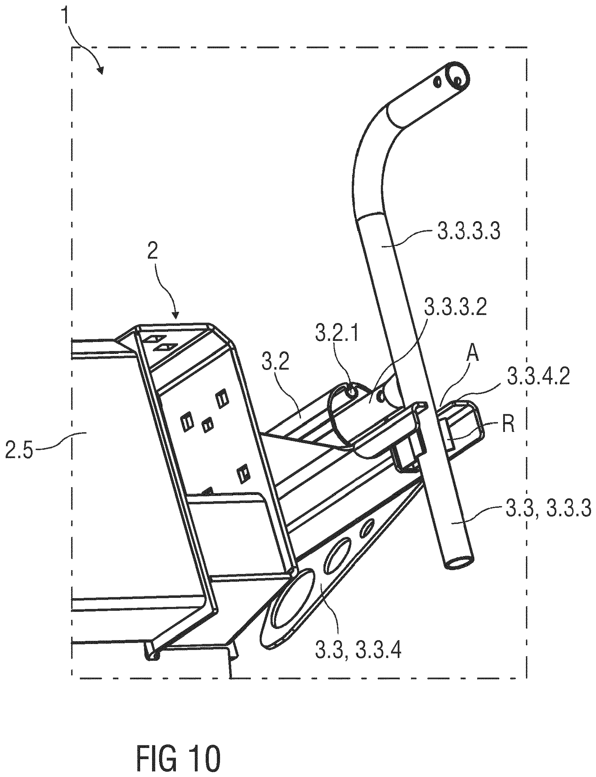

In einer nicht näher dargestellten Ausgestaltung kann im Bereich der Sperrstrukturen A1 bis A3 zumindest ein in den Figuren 9 und 10 näher dargestelltes Rastelement R befestigt sein, in welchem der Hebelarm 3.3.3.3 der Handkurbel 3.3.3 zusätzlich verrastbar ist.

**Figur** 6 zeigt einen Ausschnitt des ersten Ausführungsbeispiels des Ladegutbehälters 1 mit einer nicht arretierten Handkurbel 3.3.3 im Freilaufzustand.

Das Eingriffselement 3.3.3.1 der Handkurbel 3.3.3 weist eine Außenverzahnung auf, welche in das Eingriffselement 3.2.1 des Wickelkerns 3.2 in verschiedenen relativen Positionen zueinander eingreifen kann.

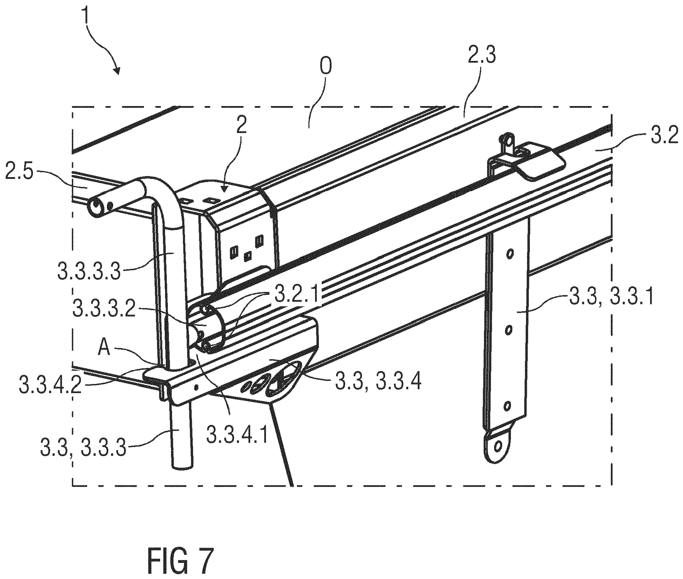

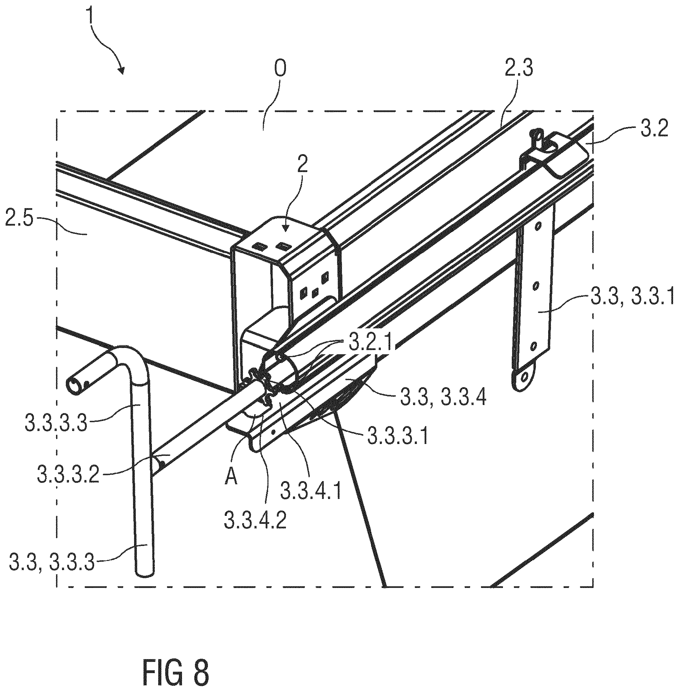

In **Figur** 7 ist eine perspektivische Ansicht eines zweiten Ausführungsbeispiels eines Ladegutbehälters 1 für ein Fahrzeug mit einer arretierten Handkurbel 3.3.3 dargestellt. **Figur** 8 zeigt einen Ausschnitt des zweiten Ausführungsbeispiels des Ladegutbehälters 1 mit einer nicht arretierten Handkurbel 3.3.3 im Freilaufzustand.

Im Unterschied zu dem in den Figuren 3 bis 6 dargestellten ersten Ausführungsbeispiel des Ladegutbehälters 1 umfasst die Arretierstruktur 3.3.4.2 eine in die Auflagefläche 3.3.4.1 eingebrachte Aussparung A, welche in einer Richtung, welche senkrecht von der Längsrichtung des Wickelkerns 3.2 in Querrichtung des Behälterkörpers 2 weggerichtet ist, offen ist. Dabei bildet die Aussparung A eine Drehsperre, in welcher die Handkurbel 3.3.3 und der Wickelkern 3.2 gegen eine Drehung gesichert sind. Gleichzeitig bildet die Aussparung A durch ihre vom Wickelkern 3.2 weg gerichtete Begrenzung eine Sperre zur Sperrung einer Bewegung der Handkurbel 3.3.3 aus ihrem Betriebszustand in den Freilaufzustand.

In einer nicht näher dargestellten Ausgestaltung kann im Bereich der Aussparung A zumindest ein in den Figuren 9 und 10 näher dargestelltes Rastelement R befestigt sein, in welchem der Hebelarm 3.3.3.3 der Handkurbel 3.3.3 zusätzlich verrastbar ist.

In **Figur** 9 ist eine perspektivische Ansicht eines dritten Ausführungsbeispiels eines Ladegutbehälters 1 für ein Fahrzeug mit einer arretierten Handkurbel 3.3.3 dargestellt. **Figur 10** zeigt einen Ausschnitt des dritten Ausführungsbeispiels des Ladegutbehälters 1 mit einer nicht arretierten Handkurbel 3.3.3 im Freilaufzustand.

Im Unterschied zu dem in den Figuren 3 bis 6 dargestellten ersten Ausführungsbeispiel des Ladegutbehälters 1 umfasst die Aussparung A keine Sperrstrukturen A1 bis A3, jedoch ein Rastelement R, in welchem der Hebelarm 3.3.3.3 der Handkurbel 3.3.3 verrastbar und somit gemeinsam mit dem Wickelkern 3.2 gegen eine Drehung gesichert ist. Gleichzeitig bildet das Rastelement R durch die mögliche Verrastung eine Sperre zur Sperrung einer Bewegung der Handkurbel 3.3.3 aus ihrem Betriebszustand in den Freilaufzustand.

### BEZUGSZEICHENLISTE

- 1: Ladegutbehälter
- 2: Behälterkörper
- 2.1: Behälterboden
- 2.2: Behälterseite
- 2.3: Behälterseite
- 2.4: Behälterklappe
- 2.5: Stirnwand
- 3: Abdeckvorrichtung
- 3.1: Plane
- 3.2: Wickelkern
- 3.2.1: Eingriffselement
- 3.3: Planenspannvorrichtung
- 3.3.1: Aufnahmehaken
- 3.3.2: Aufnahmehaken
- 3.3.3: Handkurbel
- 3.3.3.1: Eingriffselement
- 3.3.3.2: Abschnitt
- 3.3.3.3: Hebelarm
- 3.3.4: Konsole
- 3.3.4.1: Auflagefläche
- 3.3.4.2: Arretierstruktur

- A: Aussparung
- A1 bis A3: Sperrstruktur
- O: Behälteröffnung
- R: Rastelement

## Patentansprüche

1. Ladegutbehälter (1) für ein Fahrzeug mit
- einem Behälterkörper (2), umfassend eine obere Behälteröffnung (O),
- einer Abdeckvorrichtung (3) für die Behälteröffnung (O) mit einer Plane (3.1), einem länglichen Wickelkern (3.2) und einer Planenspannvorrichtung (3.3), wobei
- der Wickelkern (3.2) sich mit seiner Längsachse in einer ersten Position entlang einer ersten Behälterseite (2.2) und in einer zweiten Position entlang einer der ersten Behälterseite (2.2) gegenüberliegenden zweiten Behälterseite (2.3) erstreckt,
- die Plane (3.1) einseitig an der ersten Behälterseite (2.2) und mit einer gegenüberliegenden Planenseite an dem Wickelkern (3.2) befestigt ist,
- die Plane (3.1) in einer die Behälteröffnung (O) verschließenden Verschlussstellung zumindest teilweise von dem Wickelkern (3.2) abgewickelt, über die Behälteröffnung (O) geführt und an der zweiten Behälterseite (2.3) und über den Wickelkern (3.2) an dem Behälterkörper (2) arretiert und gespannt ist,
- die Planenspannvorrichtung (3.3) zumindest eine an einer Längsseite an dem Wickelkern (3.2) angeordnete Handkurbel (3.3.3) zur Erzeugung einer Drehung des Wickelkerns (3.2) um seine Längsachse umfasst, wobei die Handkurbel (3.3.3) in einem Betriebszustand mit dem Wickelkern (3.2) in mechanischem Eingriff steht und in einem von dem Betriebszustand abweichenden Freilaufzustand der mechanische Eingriff gelöst ist,
- die Planenspannvorrichtung (3.3) zumindest zwei in Längsausdehnung der zweiten Behälterseite (2.3) an dieser voneinander beabstandet angeordnete Aufnahmehaken (3.3.1, 3.3.2) umfasst, in welche der Wickelkern (3.2) an verschiedenen Längspositionen einhakbar und bei Ausführung einer Drehung desselben in Aufwickelrichtung der Plane (3.1) die Plane (3.1) spannbar ist, **dadurch gekennzeichnet, dass**
- die Planenspannvorrichtung (3.3) zumindest eine Konsole (3.3.4) umfasst, welche an einem der Handkurbel (3.3.3) im gespannten Zustand der Plane (3.1) zugewandten Ende der zweiten Behälterseite (2.3) befestigt ist,
- die Konsole (3.3.4) eine obere Auflagefläche (3.3.4.1) für eine Auflage des mit der Handkurbel (3.3.3) versehenen Endes des Wickelkerns (3.2) umfasst,
- die Konsole (3.3.4) derart höhenpositioniert an der zweiten Behälterseite (2.3) befestigt ist, dass der Wickelkern (3.2) im gespannten Zustand der Plane (3.1) geklemmt auf der oberen Auflagefläche (3.3.4.1) aufliegt und
- eine Auslenkung des mit der Handkurbel (3.3.3) versehenen Endes des Wickelkerns (3.2) die Klemmung bewirkt.

2. Ladegutbehälter (1) nach Anspruch 1,
**dadurch gekennzeichnet, dass** die Konsole (3.3.4) eine Arretierstruktur (3.3.4.2) zur Arretierung der Handkurbel (3.3.3) in ihrem Betriebszustand im gespannten Zustand der Plane (3.1) umfasst.

3. Ladegutbehälter (1) nach Anspruch 2,
**dadurch gekennzeichnet, dass** die Arretierstruktur (3.3.4.2) zumindest eine Sperre zur Sperrung einer Bewegung der Handkurbel (3.3.3) aus ihrem Betriebszustand in den Freilaufzustand umfasst.

4. Ladegutbehälter (1) nach Anspruch 3,
**dadurch gekennzeichnet, dass** die Sperre derart ausgerichtet ist, dass ein Hebelarm (3.3.3.3) der Handkurbel (3.3.3) im arretierten Zustand zumindest im Wesentlichen in Richtung einer Hochachse des Behälterkörpers (2) verläuft.

5. Ladegutbehälter (1) nach Anspruch 3 oder 4,
**dadurch gekennzeichnet, dass** die Sperre ein Rastelement (R) zur Verrastung der Handkurbel (3.3.3) umfasst.

6. Ladegutbehälter (1) nach einem der Ansprüche 2 bis 5,
**dadurch gekennzeichnet, dass** die Arretierstruktur (3.3.4.2) zumindest eine Drehsperre zur Sperrung einer Bewegung der Handkurbel (3.3.3) und einer damit verbundenen Drehung des Wickelkerns (3.2) entgegen der Aufwickelrichtung der Plane (3.1) umfasst.

7. Ladegutbehälter (1) nach Anspruch 6,
**dadurch gekennzeichnet, dass** die Drehsperre derart ausgerichtet ist, dass ein Hebelarm (3.3.3.3) der Handkurbel (3.3.3) im arretierten Zustand zumindest im Wesentlichen in Richtung einer Hochachse des Behälterkörpers (2) verläuft.

8. Ladegutbehälter (1) nach Anspruch 6 oder 7,
**dadurch gekennzeichnet, dass** die Drehsperre ein Rastelement (R) zur Verrastung der Handkurbel (3.3.3) umfasst.

9. Ladegutbehälter (1) nach einem der Ansprüche 6 bis 8,
**dadurch gekennzeichnet, dass** die Sperre und die Drehsperre als gemeinsames Element ausgebildet sind.

10. Ladegutbehälter (1) nach einem der vorhergehenden Ansprüche,
**dadurch gekennzeichnet, dass** die Auslenkung des Wickelkerns (3.2) 10 mm bis 20 mm beträgt.

11. Ladegutbehälter (1) nach einem der vorhergehenden Ansprüche,
**dadurch gekennzeichnet, dass** die Auslenkung des Wickelkerns (3.2) zumindest im Wesentlichen in Richtung einer Hochachse des Behälterkörpers (2) ausgebildet ist.

12. Ladegutbehälter (1) nach einem der vorhergehenden Ansprüche,
**dadurch gekennzeichnet, dass**
- der Wickelkern (3.2) zumindest im Bereich seines mit der Handkurbel (3.3.3) versehenen Endes als Hohlkörper ausgebildet ist,
- innerhalb des Hohlkörpers ein Eingriffselement (3.2.1) angeordnet oder ausgebildet ist,
- die Handkurbel (3.3.3) ein mit dem Eingriffselement (3.2.1) korrelierendes zweites Eingriffselement (3.3.3.1) umfasst,
- ein das zweite Eingriffselement (3.3.3.1) umfassender Abschnitt (3.3.3.2) der Handkurbel (3.3.3) konzentrisch innerhalb des Hohlkörpers anordbar ist,
- die beiden Eingriffselemente (3.2.1, 3.3.3.1) im Betriebszustand der Handkurbel (3.3.3) in mechanischem Eingriff stehen und
- der Abschnitt (3.3.3.2) der Handkurbel (3.3.3) im Freilaufzustand der Handkurbel (3.3.3) in Längsrichtung des Wickelkerns (3.2) zum mit der Handkurbel (3.3.3) versehenen Ende des Wickelkerns (3.2) verschoben ist.

13. Ladegutbehälter (1) nach einem der vorhergehenden Ansprüche,
**dadurch gekennzeichnet, dass** die Plane (3.1) in einer die Behälteröffnung (O) freigebenden Öffnungsstellung auf dem Wickelkern (3.2) aufgewickelt im Bereich der ersten Behälterseite (2.2) angeordnet ist.

14. Fahrzeug, umfassend zumindest einen Ladegutbehälter (1) nach einem der vorhergehenden Ansprüche.

15. Fahrzeug nach Anspruch 14, wobei der Ladegutbehälter (1) eine Kippmulde ist.

## Claims

1. Cargo container (1) for a vehicle, having
- a container body (2) comprising an upper container opening (O),
- a covering device (3) for the container opening (O), having a tarpaulin (3.1), an elongate winding core (3.2) and a tarpaulin tensioning device (3.3), wherein
- the winding core (3.2) extends with its longitudinal axis along a first container side (2.2) in a first position and along a second container side (2.3) opposite the first container side (2.2) in a second position,
- the tarpaulin (3.1) is fastened to the first container side (2.2) on one side and to the winding core (3.2) with an opposite tarpaulin side,
- the tarpaulin (3.1), in a closure position closing the container opening (O), has been unwound at least partially from the winding core (3.2), guided over the container opening (O) and locked and tensioned on the second container side (2.3) and, via the winding core (3.2), on the container body (2),
- the tarpaulin tensioning device (3.3) comprises at least one hand crank (3.3.3), arranged on the winding core (3.2) on one longitudinal side, for generating a rotation of the winding core (3.2) about its longitudinal axis, wherein the hand crank (3.3.3) is mechanically engaged with the winding core (3.2) in an operating state and the mechanical engagement is released in a free-running state different from the operating state,
- the tarpaulin tensioning device (3.3) comprises at least two receiving hooks (3.3.1, 3.3.2) which are arranged on the second container side (2.3), in a manner spaced apart from one another, along the longitudinal extent of the latter, and into which the winding core (3.2) is hookable in different longitudinal positions, and when the winding core is rotated in the winding-up direction of the tarpaulin (3.1), the tarpaulin (3.1) is able to be tensioned, **characterized in that**
- the tarpaulin tensioning device (3.3) comprises at least one bracket (3.3.4) which is fastened at an end of the second container side (2.3) that faces the hand crank (3.3.3) in the tensioned state of the tarpaulin (3.1),
- the bracket (3.3.4) comprises an upper contact face (3.3.4.1) for contact of that end of the winding core (3.2) that is provided with the hand crank (3.3.3),
- the bracket (3.3.4) is fastened in a vertical position on the second container side (2.3) such that the winding core (3.2) rests on the upper contact face (3.3.4.1) in a clamped manner in the tensioned state of the tarpaulin (3.1), and
- a deflection of that end of the winding core (3.2) that is provided with the hand crank (3.3.3) brings about the clamping.

2. Cargo container (1) according to Claim 1, **characterized in that** the bracket (3.3.4) comprises a locking structure (3.3.4.2) for locking the hand crank (3.3.3) in its operating state in the tensioned state of the tarpaulin (3.1).

3. Cargo container (1) according to Claim 2, **characterized in that** the locking structure (3.3.4.2) comprises at least one catch for immobilizing a movement of the hand crank (3.3.3) out of its operating state into the free-running state.

4. Cargo container (1) according to Claim 3, **characterized in that** the catch is oriented such that a lever arm (3.3.3.3) of the hand crank (3.3.3) extends in the locked state at least substantially in the direction of a vertical axis of the container body (2).

5. Cargo container (1) according to Claim 3 or 4, **characterized in that** the catch comprises a latching element (R) for latching the hand crank (3.3.3) in place.

6. Cargo container (1) according to one of Claims 2 to 5,
**characterized in that** the locking structure (3.3.4.2) comprises at least one rotation lock for immobilizing a movement of the hand crank (3.3.3) and an associated rotation of the winding core (3.2) counter to the winding-up direction of the tarpaulin (3.1).

7. Cargo container (1) according to Claim 6, **characterized in that** the rotation lock is oriented such that a lever arm (3.3.3.3) of the hand crank (3.3.3) extends in the locked state at least substantially in the direction of a vertical axis of the container body (2).

8. Cargo container (1) according to Claim 6 or 7, **characterized in that** the rotation lock comprises a latching element (R) for latching the hand crank (3.3.3) in place.

9. Cargo container (1) according to one of Claims 6 to 8,
**characterized in that** the catch and the rotation lock are in the form of a common element.

10. Cargo container (1) according to one of the preceding claims,
**characterized in that** the deflection of the winding core (3.2) amounts to 10 mm to 20 mm.

11. Cargo container (1) according to one of the preceding claims,
**characterized in that** the deflection of the winding core (3.2) is formed at least substantially in the direction of a vertical axis of the container body (2) .

12. Cargo container (1) according to one of the preceding claims,
**characterized in that**
- the winding core (3.2) is formed as a hollow body at least in the region of its end provided with the hand crank (3.3.3),
- an engagement element (3.2.1) is arranged or formed within the hollow body,
- the hand crank (3.3.3) comprises a second engagement element (3.3.3.1) that correlates with the engagement element (3.2.1),
- a portion (3.3.3.2), comprising the second engagement element (3.3.3.1), of the hand crank (3.3.3) is arrangeable concentrically within the hollow body,
- the two engagement elements (3.2.1, 3.3.3.1) are mechanically engaged in the operating state of the hand crank (3.3.3), and
- the portion (3.3.3.2) of the hand crank (3.3.3) has been shifted in the longitudinal direction of the winding core (3.2) towards that end of the winding core (3.2) that is provided with the hand crank (3.3.3) in the free-running state of the hand crank (3.3.3) .

13. Cargo container (1) according to one of the preceding claims,
**characterized in that** the tarpaulin (3.1) is arranged wound up on the winding core (3.2) in the region of the first container side (2.2) in an opening position opening up the container opening (O).

14. Vehicle comprising at least one cargo container (1) according to one of the preceding claims.

15. Vehicle according to Claim 14, wherein the cargo container (1) is a tipping trough.

## Revendications

1. Contenant de chargement (1) pour un véhicule avec
- un corps de contenant (2), comprenant une ouverture de contenant supérieure (O),
- un dispositif de recouvrement (3) pour l'ouverture de contenant (O) avec une bâche (3.1), un noyau d'enroulement oblong (3.2) et un dispositif de tension de bâche (3.3),
- le noyau d'enroulement (3.2) s'étendant avec son axe longitudinal dans une première position le long d'un premier côté de contenant (2.2) et dans une deuxième position le long d'un deuxième côté de contenant (2.3) opposé au premier côté de contenant (2.2),
- la bâche (3.1) étant fixée d'un côté au premier côté de contenant (2.2) et par un côté de bâche opposé au noyau d'enroulement (3.2),
- dans une position de fermeture fermant l'ouverture de contenant (O), la bâche (3.1) étant au moins partiellement déroulée du noyau d'enroulement (3.2), passant au-dessus de l'ouverture de contenant (O) et étant assujettie et tendue sur le deuxième côté de contenant (2.3) et au-dessus du noyau d'enroulement (3.2) sur le corps de contenant (2),
- le dispositif de tension de bâche (3.3) comprenant au moins une manivelle (3.3.3) agencée sur un côté longitudinal sur le noyau d'enroulement (3.2) pour produire une rotation du noyau d'enroulement (3.2) autour de son axe longitudinal, la manivelle (3.3.3) étant dans un état de fonctionnement en prise mécanique avec le noyau d'enroulement (3.2) et, dans un état de roue libre différent de l'état de fonctionnement, la prise mécanique étant rompue,
- le dispositif de tension de bâche (3.3) comprenant au moins deux crochets de réception (3.3.1, 3.3.2) agencés de manière espacée l'un de l'autre dans l'extension longitudinale du deuxième côté de contenant (2.3) sur celui-ci, dans lesquels le noyau d'enroulement (3.2) peut être accroché à différentes positions longitudinales et, lors de la réalisation d'une rotation de celui-ci dans la direction d'enroulement de la bâche (3.1), la bâche (3.1) peut être tendue, **caractérisé en ce que**
- le dispositif de tension de bâche (3.3) comprend au moins une console (3.3.4), qui est fixée à une extrémité du deuxième côté de contenant (2.3) tourné vers la manivelle (3.3.3) à l'état tendu de la bâche (3.1)
- la console (3.3.4) comprend une surface d'appui supérieure (3.3.4.1) pour un appui de l'extrémité du noyau d'enroulement (3.2) pourvue de la manivelle (3.3.3),
- la console (3.3.4) est fixée sur le deuxième côté de contenant (2.3) à une position de hauteur telle que le noyau d'enroulement (3.2) s'appuie de manière serrée sur la surface d'appui supérieure (3.3.4.1) à l'état tendu de la bâche (3.1), et
- une déviation de l'extrémité du noyau d'enroulement (3.2) pourvue de la manivelle (3.3.3) provoque le serrage.

2. Contenant de chargement (1) selon la revendication 1, **caractérisé en ce que** la console (3.3.4) comprend une structure d'assujettissement (3.3.4.2) pour assujettir la manivelle (3.3.3) dans son état de fonctionnement à l'état tendu de la bâche (3.1).

3. Contenant de chargement (1) selon la revendication 2, **caractérisé en ce que** la structure d'assujettissement (3.3.4.2) comprend au moins un blocage pour bloquer un mouvement de la manivelle (3.3.3) de son état de fonctionnement à l'état de roue libre.

4. Contenant de chargement (1) selon la revendication 3, **caractérisé en ce que** le blocage est orienté de telle sorte qu'un bras de levier (3.3.3.3) de la manivelle (3.3.3) s'étend à l'état assujetti au moins essentiellement dans la direction d'un axe vertical du corps de contenant (2).

5. Contenant de chargement (1) selon la revendication 3 ou 4, **caractérisé en ce que** le blocage comprend un élément d'encliquetage (R) pour encliqueter la manivelle (3.3.3).

6. Contenant de chargement (1) selon l'une quelconque des revendications 2 à 5, **caractérisé en ce que** la structure d'assujettissement (3.3.4.2) comprend au moins un blocage en rotation pour bloquer un mouvement de la manivelle (3.3.3) et une rotation associée à celui-ci du noyau d'enroulement (3.2) à l'encontre de la direction d'enroulement de la bâche (3.1) .

7. Contenant de chargement (1) selon la revendication 6, **caractérisé en ce que** le blocage en rotation est orienté de telle sorte qu'un bras de levier (3.3.3.3) de la manivelle (3.3.3) s'étend à l'état assujetti au moins essentiellement dans la direction d'un axe vertical du corps du contenant (2).

8. Contenant de chargement (1) selon la revendication 6 ou 7, **caractérisé en ce que** le blocage en rotation comprend un élément d'encliquetage (R) pour encliqueter la manivelle (3.3.3).

9. Contenant de chargement (1) selon l'une quelconque des revendications 6 à 8, **caractérisé en ce que** le blocage et le blocage en rotation sont réalisés sous forme d'élément commun.

10. Contenant de chargement (1) selon l'une quelconque des revendications précédentes, **caractérisé en ce que** la déviation du noyau d'enroulement (3.2) est de 10 mm à 20 mm.

11. Contenant de chargement (1) selon l'une quelconque des revendications précédentes, **caractérisé en ce que** la déviation du noyau d'enroulement (3.2) est réalisée au moins essentiellement dans la direction d'un axe vertical du corps du contenant (2).

12. Contenant de chargement (1) selon l'une quelconque des revendications précédentes, **caractérisé en ce que**
- le noyau d'enroulement (3.2) est réalisé sous forme de corps creux au moins dans la zone de son extrémité pourvue de la manivelle (3.3.3),
- un élément de prise (3.2.1) est agencé ou réalisé à l'intérieur du corps creux,
- la manivelle (3.3.3) comprend un deuxième élément de prise (3.3.3.1) en corrélation avec l'élément de prise (3.2.1),
- une section (3.3.3.2) de la manivelle (3.3.3) comprenant le deuxième élément de prise (3.3.3.1) peut être agencée de manière concentrique à l'intérieur du corps creux,
- les deux éléments de prise (3.2.1, 3.3.3.1) sont en prise mécanique à l'état de fonctionnement de la manivelle (3.3.3) et
- la section (3.3.3.2) de la manivelle (3.3.3) est décalée dans la direction longitudinale du noyau d'enroulement (3.2) vers l'extrémité du noyau d'enroulement (3.2) pourvue de la manivelle (3.3.3) à l'état de roue libre de la manivelle (3.3.3).

13. Contenant de chargement (1) selon l'une quelconque des revendications précédentes, **caractérisé en ce que**, dans une position d'ouverture libérant l'ouverture de contenant (O), la bâche (3.1) est agencée enroulée sur le noyau d'enroulement (3.2) dans la zone du premier côté de contenant (2.2).

14. Véhicule, comprenant au moins un contenant de chargement (1) selon l'une quelconque des revendications précédentes.

15. Véhicule selon la revendication 14, le contenant de chargement (1) étant une benne basculante.
